Europäisches Patentamt

European Patent Office

Office européen des brevets

(11) Veröffentlichungsnummer: **0 516 255 A1**

# (12) EUROPÄISCHE PATENTANMELDUNG

(21) Anmeldenummer: **92250120.0**

(22) Anmeldetag: **12.05.92**

(51) Int. Cl.5: **E05D 5/12**, E05D 7/10, H02B 1/38

(30) Priorität: **30.05.91 DE 9106667 U**

(43) Veröffentlichungstag der Anmeldung: **02.12.92 Patentblatt 92/49**

(84) Benannte Vertragsstaaten: **AT BE CH DE DK ES FR GB GR IT LI NL SE**

(71) Anmelder: **SIEMENS AKTIENGESELLSCHAFT Wittelsbacherplatz 2 W-8000 München 2(DE)**

(72) Erfinder: **Feuerbach, Manfred Hartmann-Ibach-Strasse 83 W-6000 Frankfurt 60(DE)**
Erfinder: **Rössler, Karl-Heinz Wilhelmbaderstrasse 23 W-6457 Maintal 1(DE)**

(54) **Scharnieranordnung für einen Schaltschrank.**

(57) Eine Scharnieranordnung für eine aus Blech bestehende Tür (7) eines Schaltschrankes umfaßt einen ortsfesten Scharnierarm (3) und einen an der Tür befestigten Lagerbock (4) sowie einen Scharnierbolzen (1) aus Rundmaterial mit Federwirkung. Zwischen einem Bolzenteil (2) des Scharnierbolzens (1) und einem krückenartigen Endteil (10) erstreckt sich ein Zwischenteil (8), der eine elastische Biegung des Endteiles (10) gegenüber dem Bolzenteil (2) gestattet. Zur Sicherung gegen Entfernung wird der Scharnierbolzen (1) aus einer in die Ecke einer Abkantung (6) der Tür weisenden Stellung bis zum Einrasten des Endteiles (10) in einer Vertiefung (13) an der Innenseite der Tür (7) gedreht.

FIG 1

EP 0 516 255 A1

Die Erfindung betrifft eine Scharnieranordnung für eine aus Blech bestehende und mit einer randseitigen Abkantung versehene Tür eines Schaltschrankes, mit einem ortsfesten Scharnierarm und einem an der Tür befestigten Scharnierbock sowie mit einem Scharnierbolzen, der aus einem Rundmaterial besteht und einen fluchtende Durchtrittsöffnungen des Scharnierarmes und des Scharnierbockes durchsetzenden geraden Bolzenabschnitt und einen krückenartig gebogenen, eine Stirnfläche aufweisenden Endteil besitzt, der etwa rechtwinklig zur Längsachse des Bolzenabschnittes gerichtet ist.

Eine Scharnieranordnung dieser Art ist beispielsweise durch die EP-B-0 192 520 bekannt geworden. Der Scharnierbolzen wird zur Montage der Tür an dem Schrankkorpus in die fluchtenden Öffnungen eingesteckt und verbleibt dort ohne besondere Sicherung. Es ist aber oft erwünscht, den Scharnierbolzen gegen eine Entfernung oder Lösung aufgrund eines beliebigen Einflusses zu sichern. Dennoch soll der Scharnierbolzen im Bedarfsfall auf einfache Weise, d. h. ohne spezielle Werkzeuge, wieder gelöst werden können. Dies kann beispielsweise erwünscht sein, um zur Verbesserung des Zuganges zum Inneren des Schaltschrankes die Tür vorübergehend zu entfernen.

Die Erfindung löst diese Aufgabe durch folgende Merkmale: Der Scharnierbolzen besteht aus einem elastisch verformbaren Werkstoff,

- zwischen dem Bolzenteil des Scharnierbolzens und dem krückenartig geformten Endteil ist ein Zwischenteil angeordnet,
- der krückenartig geformte Endteil besitzt eine Ausladung, die geringer als die Entfernung der Scharnierachse von der inneren Ecke der Abkantung der Tür, jedoch größer als die kürzeste Entfernung zwischen der Scharnierachse und den an die Ecke der Abkantung anschließenden Bereiche der Tür bemessen ist,
- etwa im Bereich der kürzesten Entfernung zwischen der Scharnierachse und den benachbarten Bereichen der Tür ist eine Vertiefung für den Eingriff des Endteiles der Scharnierbolzens angeordnet.

Die neue Scharnieranordnung gestattet es, den Scharnierbolzen lediglich durch eine Drehung von etwa 45° durch Einrasten des Endteiles in der Vertiefung gegen Entfernung zu sichern. Je nach Gestaltung der Stirnfläche des Endteiles des Scharnierbolzens und der Vertiefung ist es dann auch möglich, den Scharnierbolzen mit oder ohne Zuhilfenahme eines Werkzeuges aus der Raststellung in seine Ausgangsstellung zurückzudrehen, um ihn zu entfernen. Eine günstige Handhabung ist insbesondere dadurch zu erzielen, daß die Länge des Zwischenteiles unter Berücksichtigung des Durchmessers und der Federung des Werkstoffes des Scharnierbolzens zur Erlangung einer durch Drehung des Scharnierbolzens von Hand zu bewirkenden Rastung geeignet bemessen ist.

Falls es erwünscht ist, daß die Rastung durch einfaches Zurückdrehen des Scharnierbolzens in seine Ausgangsstellung zu lösen ist, so kann die Vertiefung in der Tür eine konische oder sphärische Kontur aufweisen. Ferner kann die Stirnfläche des Endteiles des Scharnierbolzens ballig gerundet ausgebildet sein.

Soll dagegen die Rastung nur mit größerem Kraftaufwand oder nur unter Zuhilfenahme eines Werkzeuges möglich sein, so empfiehlt es sich, die Vertiefung ebenso wie die Stirnfläche des Endteiles des Scharnierbolzens scharfkantig auszubilden.

Die Erfindung wird im folgenden anhand des in den Figuren dargestellten Ausführungsbeispieles näher erläutert.

Die Figur 1 zeigt eine Scharnieranordnung mit angrenzenden Teilen eines Schaltschrankes bei der Montage in einer Seitenansicht.

Die Figur 2 zeigt die Scharnieranordnung gemäß der Figur 1 in der Draufsicht auf den Kopf eines Scharnierbolzens.

Die Figuren 3 und 4 entsprechen den Darstellungen in den Figuren 1 und 2 mit dem Unterschied, daß der Scharnierbolzen im eingerasteten Zustand gezeigt ist.

In der Figur 5 sind abgewandelte Ausführungen einer Vertiefung für den Scharnierbolzen gezeigt.

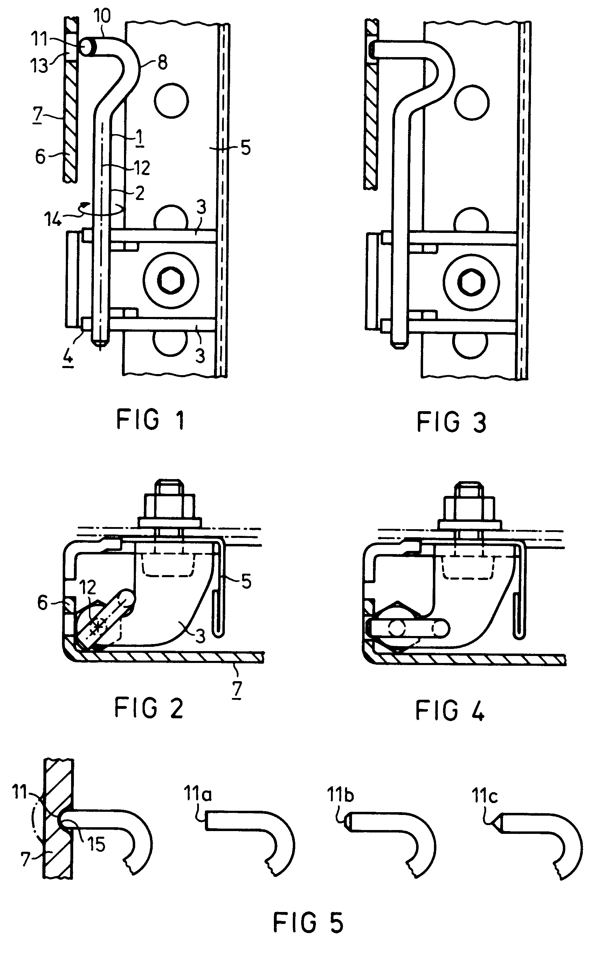

Der in der Figur 1 gezeigte, vorzuweise aus Federstahl bestehende Scharnierbolzen 1 besitzt einen geraden Bolzenteil 2, der zur Einführung in fluchtende Öffnungen ortsfester Scharnierarme 3 sowie eines Lagerbockes 4 (Figur 2) vorgesehen ist. Wie die Figuren 1 und 2 zeigen, ist der Scharnierarm 3 an einem frontseitigen Profilelement 5 eines Schaltschrankes befestigt, während der Lagerbock 4 an der Innenseite einer Abkantung 6 einer Tür 7 befestigt ist.

Ein krückenartiger Endteil 10 des Scharnierbolzens 1 besitzt eine je nach den gewünschten Eigenschaften scharfkantige oder anders geformte Stirnfläche 11, die einen solchen Abstand von der in der Figur 1 gezeigten Scharnierachse 12 besitzt, daß der Scharnierbolzen 1 entsprechend den Figur 1 und 2 in die Scharnierteile einführbar ist. Die Stirnfläche 11 steht dabei mit geringem Abstand der inneren Ecke der Abkantung 6 gegenüber. Die Entfernung zwischen der Scharnierachse 12 und der inneren Ecke der Abkantung ist größer als der Abstand zwischen der Scharnierachse und einer Vertiefung 13, die in den Figuren 1 und 2 als Durchgangsöffnung in der Abkantung 6 ausgebildet ist. Wird nun der Scharnierbolzen 1 ausgehend von der Stellung gemäß der Figur 1 in Richtung eines Pfeiles 14 gedreht, so gelangt die Stirnfläche 11 in den Bereich der Vertiefung 13 und rastet dort ein, wie die Figuren 3 und 4 zeigen. Diese Rastung wird durch die Federung des Scharnierbolzens 1 im Bereich eines Zwischenteiles 8 ermöglicht, der sich zwischen dem Bolzenteil 2 und dem Endteil 10 befindet. Der Zwischenteil 8 weist Kreisbögen entgegengesetzter Krümmung und einen an den Bolzenteil 2 anschließenden geraden Teil auf.

Aus der Figur 5 ist noch zu entnehmen, daß die Vertiefung in der Tür 7 statt als Durchgangsöffnung auch als sphärische Vertiefung 15 ausgebildet sein kann. Dabei kann die Vertiefung 15 entweder als Durchzug ausgebildet sein oder aber, wie dies strichpunktiert in der Figur 5 angedeutet ist, als Einprägung ausgeführt sein, so daß die Außenseite der Tür 7 glatt ist. Durch die abgerundete Form der Vertiefung 15 wird die Aufhebung der Rastung des Scharnierbolzens 1 durch Drehen entgegen der Richtung des Pfeiles 14 in Figur 1 erleichtert. Andererseits kann durch bewußte spitze Ausführung der Stirnfläche 11 ereicht werden, daß Farb- oder andere Schichten durchdrungen werden. In der Figur 5 sind zusätzlich zu einer abgerundeten Stirnfläche 11 zur Veranschaulichung eine scharfkantige Stirnfläche 11a, eine entgratete Stirnfläche 11b ind eine spitze Stirnflä-che 11c gezeigt.

**Patentansprüche**

1. Scharnieranordnung für eine aus Blech bestehende und mit einer randseitigen Abkantung versehene Tür eines Schaltschrankes, mit einem ortsfesten Scharnierarm und einem an der Tür befestigten Lagerbock sowie mit einem Scharnierbolzen, der aus einem Rundmaterial besteht und einen fluchtende Durchtrittsöffnungen des Scharnierarmes und des Lagerbockes durchsetzenden geraden Bolzenabschnitt und einen krückenartig gebogenen, eine Stirnfläche aufweisenden Endteil besitzt, der etwa rechtwinklig zur Längsachse des Bolzenabschnittes gerichtet ist, **gekennzeichnet durch** folgende Merkmale:

   - der Scharnierbolzen (1) besteht aus einem elastisch verformbaren Werkstoff,
   - zwischen dem Bolzenteil (2) des Scharnierbolzens (1) und dem krückenartig geformten Endteil (10) ist ein Zwischenteil (8) angeordnet,
   - der krückenartig geformte Endteil (10) besitzt eine Ausladung, die geringer als die Entfernung der Scharnierachse (12) von der inneren Ecke (9) der Abkantung (6) der Tür (7), jedoch größer als die kürzeste Entfernung zwischen der Scharnierachse (12) und den an die Ecke der Abkantung (6) anschließenden Bereiche der Tür (7) bemessen ist,
   - etwa im Bereich der kürzesten Entfernung zwischen der Scharnierachse (12) und den benachbarten Bereichen der Tür (7) ist eine Vertiefung (13, 15) für den Eingriff des Endteiles (10) des Scharnierbolzens (1) angeordnet.

2. Scharnieranordnung nach Anspruch 1, **dadurch gekennzeichnet,** daß die Länge des Zwischenteiles (8) unter Berücksichtigung des Durchmessers und der Federung des Werkstoffes des Scharnierbolzens (1) zur Erlangung einer durch Drehung des Scharnierbolzens (1) von Hand zu bewirkenden Rastung geeignet bemessen ist.

3. Scharnieranordnung nach Anspruch 1 oder 2, **dadurch gekennzeichnet,** daß die Vertiefung (15) eine konische oder sphärische Kontur aufweist.

4. Scharnieranordnung nach einem der vorangehenden Ansprüche, **dadurch gekennzeichnet,** daß die Stirnfläche (11) des Endteiles (10) des Scharnierbolzens (1) ballig gerundet ausgebildet ist.

FIG 1

FIG 3

FIG 2

FIG 4

FIG 5

Europäisches Patentamt

**EUROPÄISCHER RECHERCHENBERICHT**

Nummer der Anmeldung

EP 92 25 0120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 359 857 (D. RAMSAUER)<br>* Spalte 1, Zeile 1 - Zeile 16 *<br>* Spalte 8, Zeile 42 - Spalte 9, Zeile 9 *<br>* Spalte 10, Zeile 2 - Spalte 13, Zeile 12; Abbildungen 7-14 *<br>& EP-A-0 223 871 (D. RAMSAUER)<br>* Spalte 1, Zeile 32 - Zeile 37 *<br>--- | 1 | E05D5/12<br>E05D7/10<br>H02B1/38 |
| Y | US-A-2 766 901 (J. SUNKO)<br>* das ganze Dokument *<br>--- | 1 | |
| A | DE-U-8 910 312 (KLOCKNER-MOELLER ELEKTRIZITATS GMBH)<br>* das ganze Dokument *<br>--- | 1 | |
| D,A | EP-A-0 192 520 (SAREL APPAREILLAGE ELECTRIQUE S.A.)<br>* das ganze Dokument *<br>----- | 1 | |
| | | | **RECHERCHIERTE SACHGEBIETE (Int. Cl.5)**<br><br>E05D<br>H02B |

Der vorliegende Recherchenbericht wurde für alle Patentansprüche erstellt

| Recherchenort | Abschlußdatum der Recherche | Prüfer |
|---|---|---|
| DEN HAAG | 30 JULI 1992 | DELZOR F.N.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)